# EUROPÄISCHE PATENTSCHRIFT

(11) **EP 0 488 011 B1**
(45) Veröffentlichungstag und Bekanntmachung des Hinweises auf die Patenterteilung: **17.05.1995**
(21) Anmeldenummer: 91119639.2
(22) Anmeldetag: 18.11.1991
(51) Int. Cl.: A23K 1/18, A23K 1/14, A23K 1/10

(54) **Verfahren zum Herstellen einer zum Bereiten von Feuchtfutter für Haustiere geeigneten Futter-Trockenmischung**
Process for preparing a dry feed mixture for manufacturing moist petfoods
Procédé de préparation d'un mélange alimentaire sec pour la fabrication d'aliments humides pour animaux domestiques

(30) Priorität: 26.11.1990 DE 4037497
(43) Veröffentlichungstag der Anmeldung: 03.06.1992
(73) Patentinhaber: JUCHEM GmbH, D-66565 Eppelborn (DE)
(72) Erfinder: Juchem, Franz-Josef, W-6686 Eppelborn (DE)
(74) Vertreter: Vièl, Georg, Dipl.-Ing.

(56) Entgegenhaltungen:
- EP-A- 0 337 571
- EP-A- 0 337 573
- DE-A- 3 031 896
- DE-A- 3 701 861
- DE-B- 2 841 487
- GB-A- 1 076 676

## Beschreibung

Die Erfindung betrifft ein Verfahren zum Herstellen einer zum Bereiten von Feuchtfutter für Haustiere geeigneten Futter-Trockenmischung aus je einer oder mehreren Getreide- und/oder Hülsenfrucht-, Fleisch- und/oder Fisch-und Gemüsesorten.

Solche bekannten Futter-Trockenmischungen haben gegenüber gebrauchsfertigem Feuchtfutter verschiedene Vorteile. Einmal entfallen die bei Feuchtfutter üblichen, umweltbelastenden Metalldosen sowie der bei diesen erforderliche Einsatz von Konservierungsstoffen. Außerdem ist die Haltbarkeit des Inhalts einer angebrochenen Verpackung von Vorteil, da nur die jeweils benötigte Futtermenge zubereitet wird und somit nicht die Gefahr besteht, daß ein Futterrest verdirbt. Schließlich ergeben sich als Vorteile für Transport und Lagerung der Wegfall des Ballastwassers und eine Platzeinsparung, da statt der runden Metallbüchsen platzsparende Beutel, Tüten oder sonstige Packungen in günstigen Formen und aus organisch abbaubaren Materialien verwendet werden können.

Jedoch werden für die Futter-Trockenmischungen bisher Getreide- oder Hülsenfruchtflocken verwendet, die durch ein thermisches Verfahren, wie z. B. Rösten, und anschließendem Pressen hergestellt wurden, wobei eine chemische und geschmackliche Denaturierung der Flocken in Kauf genommen wird.

Aus der DE-A-30 31 896 ist ein derartiges Trockenfutter bekannt, das aus einer Mischung von Getreideflocken, Fleisch, Gemüsekroketten und mit Grünmehl auf melassierten Mühlennachprodukten besteht.

Ein weiteres Problem ist das sogenannte "selektive Fressen". Da in einer Futter-Trockenmischung keine homogene Masse vorliegt und die Bestandteile separat gefressen werden können, frißt das Tier nur die Bestandteile des Futters, die ihm besonders gut schmecken und nicht auch solche, die für es ernährungsphysiologisch von Bedeutung sind.

Aus der GB-A-10 76 676 ist ein Naßfutter bekannt, das insbesondere in Dosen, aber auch in Form von Biskuits, also als Trockenfutter, vorliegen kann. Allerdings bringt dieses Futter ebenfalls die obengenannten Nachteile von Dosenfutter oder aber des selektiven Fressens mit sich. Zwar werden hierbei die Getreide bei niedrigen Temperaturen gekocht; sie liegen aber in Form von Mehl vor, sind also denaturiert.

Aufgabe der Erfindung ist es somit, eine Futter-Trockenmischung zu entwickeln, bei der die Getreide und Hülsenfrüchte weitgehend ohne chemische und geschmackliche Veränderungen in Flockenform gebracht werden und ein selektives Fressen vermieden wird.

Diese Aufgabe wird erfindungsgemäß dadurch gelöst, daß aus dem Getreide oder den Hülsenfrüchten durch Befeuchtung, Quetschung und anschließender schonender Trocknung bei 50 bis 70 ° C Trockenflocken hergestellt werden, daß das Gemüse und das Fleisch bzw. der Fisch schonend getrocknet werden, daß die Getreide- und/oder Hülsenfruchtflocken, das getrocknete Gemüse, das getrocknete Fleisch und/oder der getrocknete Fisch unter Zugabe von Geliermittel gemischt werden, so daß eine bei Flüssigkeitszugabe gelierende Futter-Trockenmischung vorliegt.

Eine Weiterbildung der Erfindung ist, daß das Getreide bzw. die Hülsenfrüchte vor der Befeuchtung geschält werden.

Es ist auch erfindungsgemäß, daß der Futter-Trockenmischung Spurenelemente in verkapselter Form zugegeben werden.

Zweckmäßig ist es auch, daß das Geliermittel ein Polysaccharid ist.

Außerdem ist es sinnvoll, daß das Geliermittel ein Protein ist.

Schließlich ist es eine sinnvolle Weiterbildung der Erfindung, daß das Geliermittel ein Hydrolysat eines Proteins ist.

Die Vorteile der Erfindung bestehen im wesentlichen darin, daß eine Futter-Trockenmischung hergestellt werden kann, die durch konsequente Anwendung sanfter Konditionierungsstechnologien aus naturnahen Bestandteilen besteht und als bei Flüssigkeitszugabe gelierende Masse vorliegt, so daß das Haustier nicht nur einzelne Bestandteile frißt.

Im folgenden wird ein Ausführungsbeispiel der Erfindung näher beschrieben.

Getreidekörner werden durch Befeuchtung, Quetschung und anschließender schonender Trocknung bei 50 bis 70 ° C in Flockenform gebracht. Dieser Prozeß führt in erster Linie zu einer physikalischen Modifizierung der Stärkekörner des Getreides, die für eine hohe Verdaulichkeit des Produktes, beispielsweise beim Hund und der Katze, von Vorteil ist. Außerdem werden dabei pathogene Keime weitgehend abgetötet. Durch physikalisches Sprengen der Stärkekörner mit anschließendem Aufschließen durch die den Getreidekörnern eigenen Enzyme ergeben sich allenfalls geringfügige chemische und geschmackliche Veränderungen, wie sie auch in freier Wildbahn auftreten. Somit ist dieses Verfahren wesentlich schonender als das herkömmliche Rösten des Getreides. Mit eventuell vorhandenen Hülsenfrüchten wird das gleiche Verfahren durchgeführt. Auch das Gemüse und das Fleisch bzw. der Fisch werden durch ein analoges schonendes Trocknungsverfahren getrocknet, so daß eine Denaturierung der enthaltenen Proteine oder anderer essentieller Bestandteile, sowie eine Matrixveränderung weitgehend vermieden wird. Somit liegen auch diese Bestandteile des Trockenfutters in einer Form vor, wie sie auch in der Wildtiernahrung vorkommt.

Anschließend werden die Getreide- bzw. Hülsenfruchtflocken, das getrocknete Gemüse und das Fleisch sowie eventuell der Fisch gemischt.

Vor dem Mischvorgang werden noch wichtige Spurenelemente wie Vitamine, Mineralstoffe und eventuell auch essentielle Nährstoffe wie Fett- onder Aminosäuren in Form verkapselter und somit haltbarer Pellets zugegeben. Außerdem wird auch Geliermittel zugesetzt, z. B. Polysaccharide, Proteine oder Hydrolysate eines Proteins.

Nach dem Mischvorgang liegt dann die fertige Futter-Trockenmischung vor mit z. B. folgender Zusammensetzung:
70 % Getreide- bzw. Hülsenfruchtflocken
15 % getrocknetes Fleisch bzw. Fisch
10 % getrocknetes Gemüse
5 % Geliermittel und Spurenelemente.

Je nach Tierart läßt sich aus den Zutaten ein Futter mit der für das Tier optimalen Zusammensetzung aus Eiweiß, Fett, Kohlenhydraten und Spurenelementen zusammenstellen in einer Qualität, die dem Futter in freier Wildbahn sehr nahekommt.

Kurz vor dem Verfüttern wird die Futter-Trockenmischung mit Flüssigkeit, z. B. Wasser angerührt, kurz stehengelassen und dann in einen Freßnapf als gelierte Masse gestürzt.

Es bietet sich in sofern an, einen bekannten konischen Napf zu verwenden, an dem Eichstriche für die Futter-Trockenmischung und die Flüssigkeit vorgesehen sind.

Nach diesem Verfahren wird jeweils eine Tiermahlzeit oder Tagesration als Feuchtfutter zubereitet und es ergeben sich keine Haltbarkeitsprobleme wie bei angebrochenen Feucht-Futterdosen.

Die Futter-Trockenmischung läßt sich durch den Wegfall des Ballastwassers leichter verpacken und transportieren.

Sie kann zur Herstellung eines klarsichtigen Feuchtfutters, z. B. für Katzen und Hunde, oder auch bei geringerer Wasserzugabe als Halbfeuchtfutter nach den geltenden Begriffsbestimmungen verwendet werden.

## Patentansprüche

1. Verfahren zum Herstellen einer zum Bereiten von Feuchtfutter für Haustiere geeigneten Futter-Trockenmischung aus je einer oder mehreren Getreide- und/oder Hülsenfrucht-, Fleisch- und/oder Fisch- und Gemüsesorten, **dadurch gekennzeichnet,** daß aus dem Getreide oder den Hülsenfrüchten durch Befeuchtung, Quetschung und anschließender schonender Trocknung bei 50 bis 70 ° C Trockenflocken hergestellt werden, daß das Gemüse und das Fleisch bzw. der Fisch schonend getrocknet werden, daß die Getreide- und/oder Hülsenfruchtflocken, das getrocknete Gemüse, das getrocknete Fleisch und/oder der getrocknete Fisch unter Zugabe von Geliermittel gemischt werden, so daß eine bei Flüssigkeitszugabe gelierende Futter-Trockenmischung vorliegt.

2. Verfahren nach Anspruch 1, dadurch **gekennzeichnet,** daß das Getreide bzw. die Hülsenfrüchte vor der Befeuchtung geschält werden.

3. Verfahren nach Anspruch 1, dadurch **gekennzeichnet,** daß der Futter-Trockenmischung Spurenelemente in verkapselter Form zugegeben werden.

4. Verfahren nach Anspruch 1 oder 2, dadurch **gekennzeichnet,** daß das Geliermittel ein Polysaccharid ist.

5. Verfahren nach Anspruch 1 oder 2, dadurch **gekennzeichnet,** daß das Geliermittel ein Protein ist.

6. Verfahren nach Anspruch 1 oder 2, dadurch **gekennzeichnet,** daß das Geliermittel ein Hydrolysat eines Proteins ist.

## Claims

1. Process for the preparation of a dry feed mix suitable for preparing moist feed for pets, composed of in each case one or more types of cereals and/or pulses, meat and/or fish as well as vegetables, characterized in that dry flakes are prepared from the cereal or the pulses by moistening, rolling and subsequently gently drying them at 50 to 70°C, in that the vegetable and the meat, or fish, are gently dried, and in that the flaked cereals and/or pulses, the dried vegetables as well as the dried meat and/or the dried fish are mixed while adding gellant, to give a dry feed mix which gels when liquid is added.

2. Process according to Claim 1, characterized in that the cereals, or pulses, are husked prior to moistening.

3. Process according to Claim 1, characterised in that trace elements are added to the dry feed mix in encapsulated form.

4. Process according to Claim 1 or 2, characterized in that the gellant is a polysaccharide.

5. Process according to Claim 1 or 2, characterized in that the gellant is a protein.

6. Process according to Claim 1 or 2, characterized in that the gellant is a protein hydrolysate.

## Revendications

1. Procédé de préparation d'un mélange sec qui convient pour obtenir un aliment à l'état humide pour l'animal domestique, constitué d'une sorte ou de plusieurs sortes de céréales et/ou de légumineuses, de viandes et/ou de poissons et de légumes, caractérisé en ce qu'il consiste à préparer à partir de la céréale ou des légumineuses des flocons secs par humidification, expression et ensuite séchage ménagé entre 50 et 70°C, à sécher les légumes et la viande ou le poisson de manière ménagée et à mélanger les légumes séchés, la viande séchée et/ou le poisson séché avec addition d'un agent gélifiant, de manière à obtenir un mélange sec d'aliments pour l'animal se gélifiant par addition d'un liquide.

2. Procédé suivant la revendication 1, caractérisé en ce qu'il consiste à éplucher les légumes ou les légumineuses avant l'humidification.

3. Procédé suivant la revendication 1, caractérisé en ce qu'il consiste à ajouter au mélange sec d'aliment pour l'animal des oligo-éléments sous forme encapsulée.

4. Procédé suivant la revendication 1 ou 2, caractérisé en ce que l'agent gélifiant est un polysaccharide.

5. Procédé suivant la revendication 1 ou 2, caractérisé en ce que l'agent gélifiant est une protéine.

6. Procédé suivant la revendication 1 ou 2, caractérisé en ce que l'agent gélifiant est un hydrolysat de protéine.
